# EUROPEAN PATENT APPLICATION

(11) **EP 1 388 499 A2**
(43) Date of publication of application: **11.02.2004**
(21) Application number: 03015639.2
(22) Date of filing: 17.07.2003
(51) Int. Cl.: B65D 6/16, B29C 45/14, B65D 1/22

(54) **Foldable container**

(30) Priority: 09.08.2002 IT MO20020233
(71) Applicant: Process di Mescoli Cav. Giancarlo & C. S.a.s., 41040 Spezzano di Fiorano Modenese (Modena) (IT)
(72) Inventor: Mescoli, Giancarlo, 41049 Sassuolo Modena (IT)
(74) Representative: Luppi, Luigi

(57) **Abstract**

Container means, said container means being obtainable from semi finished laminar means (2) foldable along weakening means (3) to pass from a substantially two-dimensional configuration (A) to an assembled three-dimensional configuration, comprises pressure fastening means suitable for mutually fastening portions (20, 21, 22, 23) of said semi finished laminar means (2) to keep said container means in said assembled three-dimensional configuration, said fastening means comprising joint means (6) which is distinct from said semi finished laminar means (2) and connected to said semi finished laminar means (2).

## Description

This invention concerns container means obtainable from sheet material, in particular, container means provided with fastening means arranged to interconnect portions of the aforesaid sheet material, said portions defining walls of the container means itselves.

Well known for the storage and transport of items, of fruit in particular, are containers, or boxes, which are substantially parallelepiped-shaped, said containers, or boxes, being superiorly open to allow the introduction of the fruit into a space defined by the walls of the containers itselves and for the removal of the fruit from the above-mentioned space.

Such containers are made from a sheet material such as cardboard, or plywood, or composite fibrous material, for example MDF, from which a laminar element is obtained, via die-cutting for example, said laminar element bearing the two-dimensional development of a container to be made.

In such laminar element various portions are identifiable, said portions comprising, for example, a base of a container, side walls of a container and any appendices or flaps, which are attached to a wall and suitable for facilitating the fastening of the latter to a further wall adjacent to it.

The above-mentioned portions are separated by weakening lines, or preferential folding lines, which allow the rotation of one portion away from the others to enable the transformation from a substantially two-dimensional configuration to a three-dimensional configuration during the formation of the container.

In particular, well-known are containers made from a distinctively rigid and resistant sheet material, such as, for example, plywood or MDF.

With the aforesaid sheet material laminar elements are made inside which, along preferential folding lines, slots are obtained into which plastic material is injected, said plastic material being suitable for producing a hinge suitable for connecting portions of said laminar elements which define walls of the container means to be obtained, said hinge being also suitable for enabling relative rotation of such portions. Advantageously, the plastic material is injected into the aforesaid slots in such a way as to form a body that contracts the section along a median line, so that it can be easily misshapen to construct the above-mentioned hinge.

A defect of the above-described containers is the fact that during use the plastic material that constitutes the hinge, being fastened only by adhesion to the laminar element, tends to come away from the latter rendering the containers practically useless.

To make a container of the above-described type, a laminar element is placed on a level surface and then the sheet material is folded along the preferential folding lines according to a determined folding sequence in order to complete the construction of the container.

To give stability to the container made in this way, a layer of glue is deposited between parts of the walls that will be touching each other in the three-dimensional configuration.

Another defect of the well-known containers is the fact that the gluing considerably complicates the production cycle and limits its productivity, since the number of container means assembled by unit of time cannot rise above a preset quantity.

Alternatively, if the sheet material is plywood or composite fibrous material, the aforesaid portions of walls can be interconnected using seaming elements, such as metal staples.

In such a case, if sharp parts of the seaming elements protrude from the sheet material, workers responsible for producing the containers and handling the latter are at risk of injury.

A further defect which is common to the above described types of containers is the fact that the obtained containers, once assembled and arranged in the three-dimensional configuration, cannot return to the two-dimensional configuration unless the glued parts are forced or the seaming elements are removed. This causes a certain amount of difficulty in the storage of the containers ready to be filled and the need for large storerooms.

Another alternative is to make joints in the laminar elements, said joints including, for example, jutting elements and respective grooves that fit together to retain the three dimensional-configuration of the box.

A defect of these container means is the fact that the jutting elements constitute points with less mechanical resistance which tend to break easily during assembly.

In addition assembly can be rather difficult because of imprecision or defects of the above-mentioned joints.

An aim of this invention is to improve the well-known container means.

Another aim of the invention is to obtain container means which is easy to assemble and provided with high mechanical resistance.

A further aim of the invention is to make container means that can be manufactured and assembled automatically with high productivity.

Yet another aim of the invention is to obtain container means that can be transferred easily from an assembled, three-dimensional position, wherein they can receive products, and a substantially two-dimensional resting position, wherein they can be advantageously stored before or after use.

In a first aspect of the invention, a container means is provided, said container means being obtainable from semi finished laminar means foldable along a weakening means in order to pass from a substantially two-dimensional configuration to an assembled three-dimensional configuration and comprising a pressure fastening means suitable for mutually fastening portions of said semi finished laminar means in order to maintain said container means in said assembled three-dimensional configuration, characterised in that said pressure fastening means comprises a joint means which is distinct from said semi finished laminar means and connected to said semi finished laminar means.

In a preferred version, said joint means includes a male means associable with a female means, said male means being arranged along points of said portions that in the assembled three-dimensional configuration face further points of said portions along which said female means is arranged.

In another preferred version, the joint means is made of plastic material that is injected and formed in suitable cavities made in the semi finished laminar means.

In a further preferred version, the weakening means comprises plastic material that is injected into slots formed in the semi finished laminar means to construct hinges that allow the relative rotation of said portions of the semi finished laminar means.

Advantageously, the joint means and the aforesaid hinges are made using the same plastic material in just one moulding cycle.

In yet another preferred version, the male means comprises a jutting means suitable for engaging respective seat means obtained in the above-mentioned female means.

The jutting means projects from a support means which is positioned inside hollow means formed in the thickness of the semi finished laminar means.

Advantageously, the jutting means can be moved from a withdrawn resting position wherein it is substantially entirely contained within the hollow means and an advanced working position in which it comes out of the hollow means to engage the respective seat means.

In such a case, the jutting means is provided with a bracket means that projects from them and is formed so as to enable the jutting means to pass from the withdrawn resting position to an advanced working position, and vice versa, when an external force is applied on the jutting means itselves.

Advantageously, the joint means comprises a first male means extending substantially parallel to the semi finished laminar means and suitable for coupling with a first female means which is made in a portion of the semi finished laminar means, said portion being destined to define a base of the container means to be obtained.

Still advantageously, the joint means comprises a further male means extending substantially at right angles to the semi finished laminar means and suitable for coupling with a further female means which is made in portions of the semi finished laminar means, said portions being destined to define side walls of the container means to be obtained.

Advantageously, the male means can be associated with the respective female means in a removable manner so that before or after being used the container means can be arranged and stored in the two-dimensional configuration, saving a considerable amount of space.

In yet another preferred version, the joint means comprises a hooking promoting means arranged to improve the connection between male means and female means and the semi finished laminar means.

Advantageously, the hooking promoting means comprises body means having a dovetail section and suitable for being shapingly coupled with hollow means which is suitably shaped and made in the semi finished laminar means.

Still advantageously, the hooking promoting means comprises an appendage means which projects from the joint means and is formed so as to considerably increase the surface of interaction between the joint means and the semi finished laminar means.

In such a way, the container means tend to maintain the assembled three-dimensional configuration even if they are filled with heavy products, the hooking promoting means avoiding the expulsion of the joint means from their respective cavities and their consequent detachment from the semi finished laminar means.

Thanks to this aspect of the invention, it is possible to obtain particularly resistant and easy to produce container means.

It is also possible to produce container means automatically and with high productivity.

Finally, if the weakening means is made of plastic material it is possible, in the same moulding operation, to make the joint means and the relative hooking promoting means too, thus further increasing productivity.

In a second aspect of the invention, a container means is provided, said container means being obtainable from a semi finished laminar means foldable along weakening means in order to pass from a substantially two-dimensional configuration to an assembled three-dimensional configuration, said container means comprising a wall means which is made from portions of said semi finished laminar means, characterised in that along an edge means of said wall means a joining means is provided, said joining means being suitable for preventing damage to products which can be placed in said container means.

In a preferred version, the joining means comprises a coating means, which is associated with said edge means.

In another preferred version, the coating means is made of a shockproof material, for example plastic material.

In a further preferred version the joining means comprises rounded borders means, which is made of plastic material and connected to the edge means.

Thanks to this aspect of the invention, it is possible to obtain container means that does not damage or in any way impair the quality of the products that are placed inside it.

In addition, if the container means comprises weakening means consisting of hinges made from plastic material, the joining means can be obtained via the same moulding operation with which the aforesaid hinges are made.

In a third aspect of the invention, a container means is provided, said container means being obtainable from a semi finished laminar means foldable along weakening means in order to pass from a substantially two-dimensional configuration to an assembled three-dimensional configuration, said weakening means comprising a connecting means suitable for mutually interconnecting portions of said semi finished laminar means and enabling a relative rotation of said portions,
characterised in that said weakening means comprises a grasping means arranged for strengthening the fastening of said connecting means to said semi finished laminar means.

In a preferred version,' the grasping means comprises protuberance means extending from the weakening means in order to be shapingly coupled with respective cavity means, said cavity means being made in the semi finished laminar means.

In another preferred version, the weakening means and the grasping means is made of plastic material.

Thanks to this aspect of the invention it is possible to obtain container means in which the weakening means is firmly fixed to the semi finished laminar means, which gives the container means better mechanical resistance.

This is obtained in as much that, unlike what happens in container means according to prior art, a connecting joint is made between the weakening means and the semi finished laminar means.

The invention can be better understood and implemented with reference to the attached drawings, which illustrate an example, unrestrictive form, in which:
Figure 1 is a plan view of the container means according to the invention, shown in a two-dimensional configuration;
Figure 2 is an enlarged and interrupted detail taken from Figure 1;
Figure 3 is a section taken along a III-III surface of Figure 2;
Figure 4 is a plan view of male means of joint means of the container means according to the invention;
Figure 5 is a section taken along a V-V surface of Figure 4;
Figure 6 is a section taken along a vertical surface of female means associable with the male means of Figure 5;
Figure 7 is a section taken along a VII-VII surface of Figure 4.

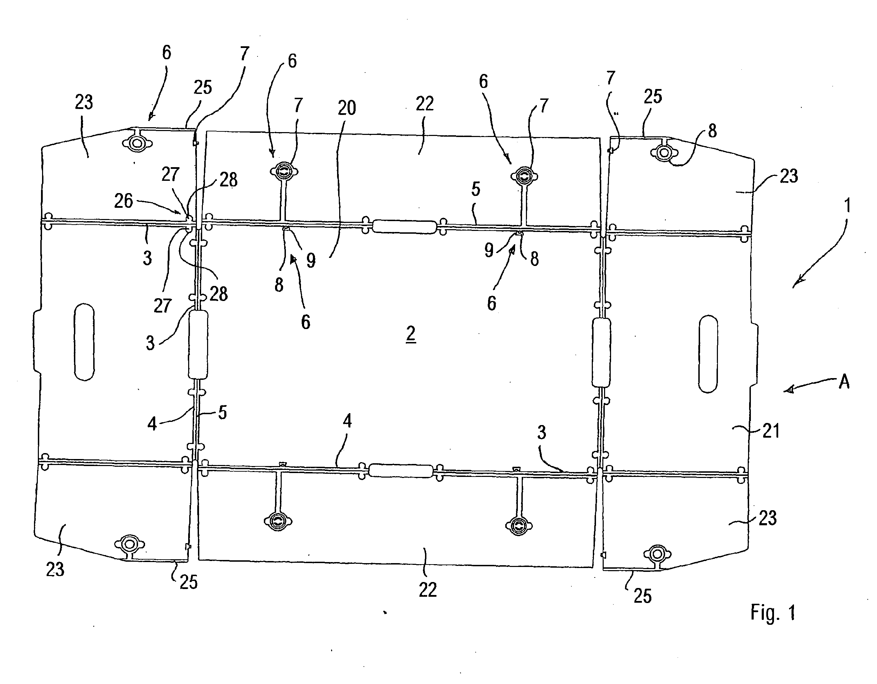

Figure 1 shows a container means 1 obtainable from semi finished laminar means 2, said semi finished laminar means 2 being foldable along weakening means 3 in order to pass from a substantially two-dimensional configuration, which is marked X, to an assembled three-dimensional configuration, which is not illustrated, wherein the container means 1 is suitable for receiving products.

The weakening means 3 is made by forming slots 4 in the semi finished laminar means 2 and injecting plastic material, for example polypropylene, into the slots 4, so that hinges 5 are created, said hinges 5 being suitable for enabling the relative rotation of adjacent portions of the semi finished laminar means 4.

The hinges 5 have a cross section that narrows along the centre line of the section itself, in order to define a preferential folding zone.

In practical implementation, the container means is produced from a sheet material, advantageously a sheet material with high mechanical resistance, for example plywood or fibrous composite material, in which the slots 4 have been made.

Later, after the plastic material has been injected into the slots 4, the sheet material undergoes shearing or die-cutting so that the semi finished laminar means 2 is made therefrom.

The container means 6 also comprises grasping means 26 arranged for firmly fixing the hinges 5 to the semi finished laminar means 2 in order to prevent the detachment of the hinges 5 from the container means 6 during use.

The grasping means 26 comprises protuberances 27 which are shapingly coupled with cavities 28, said cavities 28 being made in the semi finished laminar means 2.

In such a way, the hinges 5 are connected to the semi finished laminar means 2 through a connecting joint and not only through the adhesion of the plastic material to the internal surfaces of the cavities 4, as in the prior art container means.

The container means 1 also comprises pressure fastening means suitable for mutually fastening the portions of the semi finished laminar means 2 that define the walls of the container means 1, in order to maintain the container means 1 in the assembled three-dimensional configuration.

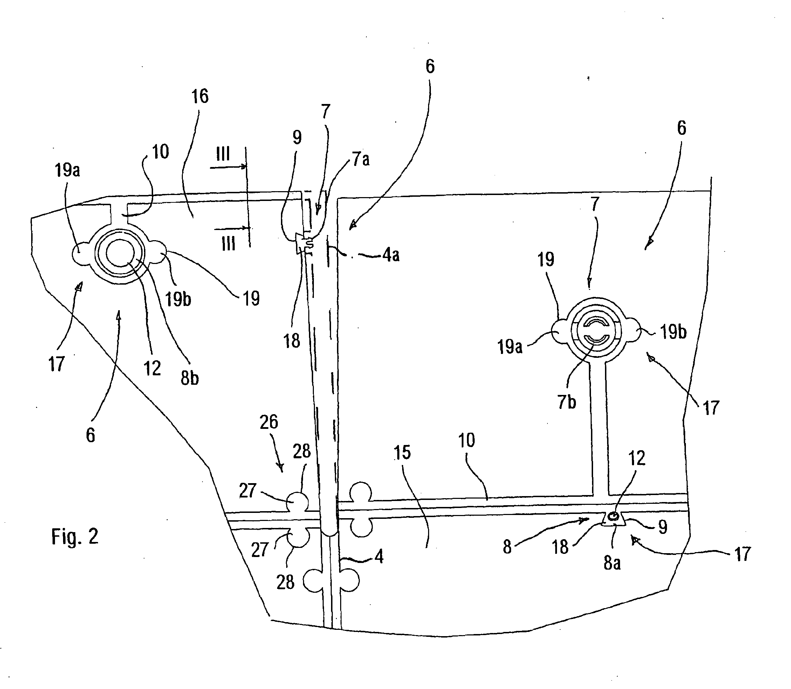

With reference to Figures 2, 4, 5, 6 and 7, the pressure fastening means comprises joint means 6 provided with male means 7 associable with female means 8, the male means 7 and the female means 8 being at least partially lodged in hollow means 9 obtained from the semi finished laminar means 2.

The joint means 6 are advantageously made with the same plastic material that constitutes the hinges 5, so that with only one moulding operation the hinges 5, the grasping means 26 connected to them and the joint means 6 can be associated with the semi finished laminar means 2. To such an end, in the semi finished laminar means 2 a feeding channel means 10 is provided, said feeding channel means 10 enabling the molten plastic material to be inserted inside the hollow means 9, wherein said molten plastic material is shaped in order to produce the male means 7, or the female means 8.

The male means 7 comprises jutting means 11 suitable for engaging respective seat means 12 formed in the female means 8.

The jutting means 11 projects from support means 13 positioned inside the hollow means 9, said hollow means 9 being formed in the thickness S of the semi finished laminar means 2.

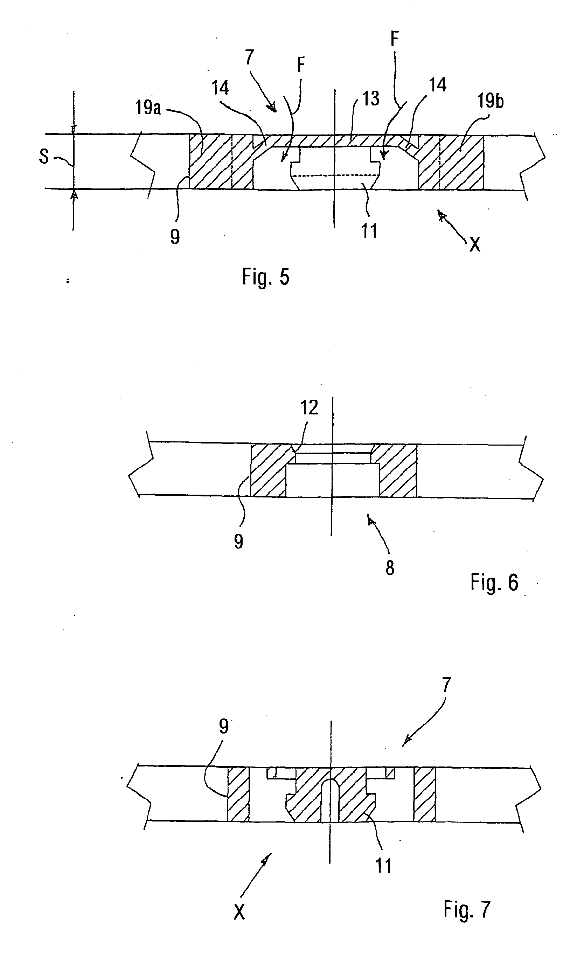

The jutting means 11 can be moved between a withdrawn resting position, marked X in Figures 5 and 7, in which it is substantially entirely contained in the hollow means 9, and an advanced working position, not shown, in which it comes out, at least partially, from the hollow means 9 in order to engage the respective seat means 12.

The support means 13 is connected to a base element of the male means 7 through bracket means 14 Belleville spring-shaped; this bracket means 14 comprises a first extremity connected to the support means 13 and a second extremity connected to a base element of the male means 7, so that they swing around said second extremity, as indicated by arrows F.

During use, when a force is applied to the support means 13, the jutting means 11 passes from the withdrawn resting position X to the advanced working position, and vice versa.

As shown in Figure 2, the male means 7 comprises first male means 7a extending substantially parallel to the semi finished laminar means 2 and suitable for coupling with first female means 8a, said female means 8a being made in a portion 15 of the semi finished laminar means 2 which is destined to define a base of the container means 1.

The male means 7 also comprises further male means 7b extending substantially at right angles to the semi finished laminar means 2 and suitable for coupling with further female means 8b, said further female means 8b being made in a further portion 16 of the semi finished laminar means 2 which is destined to define side walls of the container means 1.

The joint means 6 comprises hooking promoting means 17 arranged to improve the connection of the male means 7 and the female means 8 to the semi finished laminar means 2, in order to avoid the joint means 6 being taken out of the respective hollow means 9 during use because of the strain generated by the weight of the objects arranged inside the container means 1.

The hooking promoting means 17 can comprise body means 18 that has a dovetail section and is suitable for being shapingly coupled with suitably shaped hollow means 9. Alternatively, the hooking promoting means 17 comprises appendage means 19 which projects laterally from the joint means 6 and such to considerably increase the grasping area of the joint means 6 to the semi finished laminar means 2.

Advantageously, the appendage means comprises a pair of appendages 19a, 19b that extend from diametrically opposite zones of the joint means 6.

With reference to Figure 1, in the semi finished laminar means 2 there are defined portions that, in the assembled three-dimensional configuration, individuate walls of the container means 1.

In particular, the semi finished laminar means 2 comprises portions defining an end wall 20, first sidewalls 21 and second sidewalls 22.

The semi finished laminar means 2 also comprises further portions that define flaps 23 suitable for allowing the mutually fastening of the first sidewalls 21 and the second sidewalls 22, in the assembled three-dimensional configuration of the container means 1.

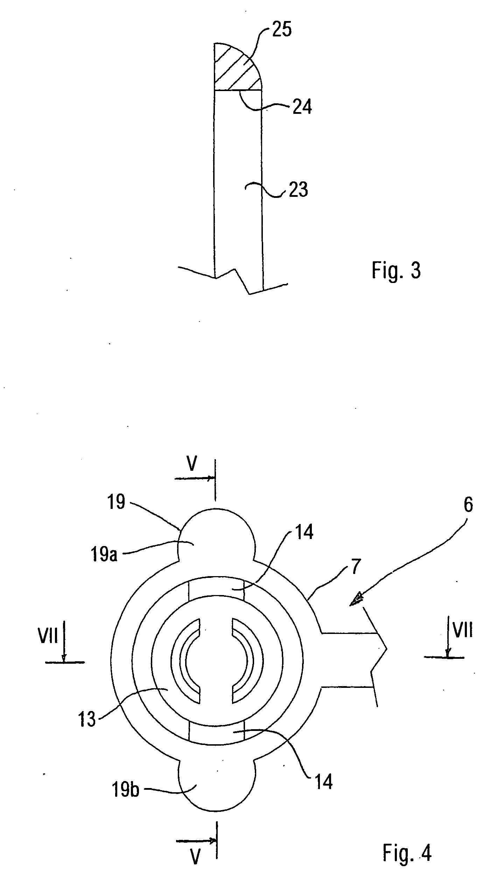

As shown in Figure 3, the flaps 23 are provided with edge means 24 that faces an inner zone of the container means 1 in the assembled three-dimensional configuration, said edge means 24 being able to interact with the products arranged inside the container means 1 and cause them to deteriorate.

In order to avoid the risk of damage to the products, the container means 6 comprises joining means 25 attached to said edge means 24.

Advantageously, the joining means 25 comprises a coating means which is made of shockproof material, for example plastic material.

The joining means 25 comprises rim means which is made of plastic material and has a rounded shape, said rounded shape being connected to the edge means 24.

During the manufacturing of the container means 1 according to the invention, tool means, that are not shown, is used to produce both the slots 4 and the hollow means 9.

Later on, during a same cycle of injection and forming of the plastic material, not only the hinges 5 and the joint means 6 but also the joining means 25 is made.

To such an end, as shown by the broken line in Figure 2, the plastic material arranged for forming the joining means 25 is fed through a portion 4a of a slot 4 that is then trimmed when the semi finished laminar means 2 is made from the sheet material.

Advantageously, the dimensions of the joint means 6, the grasping means 26 and the joining means 25 are such as to not project from the volume that is defined by the thickness S of the semi finished laminar means.

In particular, concerning the joint means 6, it occurs that the female means 8 is such that it does not project from the respective hollow means 9.

Furthermore, the first male means 7a is always contained within the thickness S of the semi finished laminar means 2, while the further male means does not project from the volume of the thickness S, at least when it is in the withdrawn resting position X.

In this way, the manufacturing, storage and handling of the container means 6, in the two-dimensional configuration, is particularly simple and advantageous, because there are no elements that project from the surface of the semi finished laminar means 2.

## Claims

1. Container means, said container means being obtainable from semi finished laminar means (2) foldable along weakening means (3) to pass from a substantially two-dimensional configuration (A) to an assembled three dimensional configuration and comprising pressure fastening means suitable for mutually fastening portions (20, 21, 22, 23) of said semi finished laminar means (2) to maintain said container means in said assembled three-dimensional configuration, **characterised in that** said pressure fastening means comprises joint means (6) which is distinct from said semi finished laminar means (2) and connected to said semi finished laminar means (2).

2. Container means according to claim 1, wherein said joint means (6) is made of plastic material.

3. Container means according to claim 2, wherein said semi finished laminar means (2) comprises hollow means (9) inside which said plastic material can be injected and moulded.

4. Container means according to any of preceding claims, wherein said weakening means (3) comprises hinge means (5) suitable for enabling a relative rotation of said portions (20, 21, 22, 23).

5. Container means according to claim 4, wherein said hinge means (5) is made from plastic material means.

6. Container means according to claim 5 when claim 4 depends on claim 3, wherein said plastic material means comprises said plastic material.

7. Container means according to claim 5, or 6, wherein said semi finished laminar means (2) comprises slot means (4) that receives said plastic material means.

8. Container means according to claim 7, wherein said semi finished laminar means (2) also comprises channel means (10) suitable for interconnecting said slot means (4) and said hollow means (9).

9. Container means according to any of preceding claims, wherein said joint means (6) comprises male means (7), said male means (7) being associated with first portions (22, 23) of said portions and cooperating with female means (8) associated with further portions (20, 22) of said portions.

10. Container means according to claim 9, wherein said male means (7) comprises jutting means (11) suitable for engaging respective seat means (12) obtained in said female means (8).

11. Container means according to claim 10, wherein said jutting means (11) can be moved between a withdrawn resting position (X) in which it does not interact with said seat means (12) and an advanced working position in which it is received in said seat means (12) .

12. Container means according to claim 10, or 11, wherein said seat means (12) is entirely contained within the thickness (S) of said semi finished laminar means (2).

13. Container means according to claim 11, or 12 when depending on claim 11, wherein, in said withdrawn resting position (X), said jutting means (11) is entirely contained within the thickness (S) of said semi finished laminar means (2).

14. Container means according to any of claims 10 to 13, wherein said jutting means (11) is connected to bracket means (14), said bracket means (14) having a first extremity connected to said jutting means (11) and a second extremity connected to a base body of said male means (7).

15. Container means according to any of claims 9 to 14, wherein said male means (7) comprises first male means (7a) extending substantially parallel to said semi finished laminar means (2) and suitable for coupling with first female means (8a) of said female means (8).

16. Container means according to any of claims 9 to 15, wherein said male means (7) comprises further male means (7b) substantially extending at right angles to said semi finished laminar means (2) and suitable for coupling with further female means (8b) of said female means (8).

17. Container means according to any of preceding claims, wherein said joint means (6) comprises hooking promoting means (17) arranged to improve the connection of said joint means (6) to said semi finished laminar means (2).

18. Container means according to claim 17, wherein said hooking promoting means (17) comprises body means (18) integral with said joint means (6) and having a dovetail section suitable for being shapingly coupled with suitably shaped hollows (9) of said semi finished laminar means (2).

19. Container means according to claim 17, or 18, wherein said hooking promoting means (17) comprises appendage means (19) which projects from said joint means (6) and is formed in such a way as to increase the surface of the part of the joint means (6) interacting with the semi finished laminar means (2).

20. Container means, according to any of preceding claims, wherein said portions define wall means (20, 21, 22, 23) of said container means (1).

21. Container means according to claim 20, wherein, along edge means (24) of said wall means, joining means (25) is provided, said joining means (25) being suitable for preventing damage to the products which can be placed in said container means (1).

22. Container means according to claim 21, wherein said joining means comprises rounded edge means (25).

23. Container means according to claim 21, or 22, wherein said joining means (25) is made from further plastic material means.

24. Container means according to claim 23 when claim 20 depends on claim 2, or 3, or one of the claims 4 to 19 when depending on claim 2 or 3, wherein said further plastic material means comprises said plastic material.

25. Container means according to one of claims 21 to 24, wherein said joining means (24) is entirely contained within the thickness (S) of said semi finished laminar means (2).

26. Container means according to any of preceding claims, wherein said weakening means (3) comprises grasping means (26) arranged to strengthen the fastening of said weakening means (3) to said semi finished laminar means (2).

27. Container means, according to claim 26, wherein said grasping means (26) comprises protuberance means (27) extending from said weakening means (3) for being shapingly coupled with respective cavity means (28) made in said semi finished laminar means (2).

28. Container means according to claim 26, or 27, wherein said grasping means (26) is made from yet further plastic material means.

29. Container means according to claim 28 when claim 26 depends on claim 2, or 3, or one of the claims 4 to 25 when depending on claim 2, or 3, wherein said yet further plastic material means comprises said plastic material.

30. Container means according to any of claims 26 to 30, wherein said grasping means (26) is entirely contained within the thickness (S) of said semi finished laminar means.

31. Container means, said container means being obtainable from semi finished laminar means (2) foldable along weakening means (3) to pass from a substantially two-dimensional configuration (A) to an assembled, three-dimensional configuration, said container means (1) comprising wall means (20, 21, 22, 23) made from portions of said semi finished laminar means, **characterised in that** along edge means (24) of said wall means joining means (25) is provided, said joining means (25) being suitable for preventing damage to the products which can be placed in said container means (1).

32. Container means according to claim 31, wherein said joining means comprises rounded edge means (25).

33. Container means according to claim 31, or 32, wherein said joining means (25) is made of plastic material.

34. Container means according to one of claims 31 to 33, wherein said joining means (24) is entirely contained within the thickness (S) of said semi finished laminar means (2).

35. Container means according to one of claims 31 to 34 and further comprising pressure fastening means suitable for mutually interconnecting said wall means (20, 21, 22, 23) to maintain said container means (1) in said assembled three-dimensional configuration.

36. Container means according to claim 35, wherein said fastening means comprises joint means (6) which is distinct from said semi finished laminar means (2) and connected to said semi finished laminar means (2).

37. Container means according to claim 36, wherein said joint means (6) is made from plastic material means.

38. Container means according to claim 37, wherein said semi finished laminar means (2) comprises hollow means (9) inside which said plastic material means can be injected and moulded.

39. Container means according to claim 37 or 38 when claim 35 depends on claim 33 or on claim 34 when depending on claim 33, wherein said plastic material means comprises said plastic material.

40. Container means according to any of claims 31 to 39, wherein said weakening means (3) comprises hinge means (5) suitable for enabling a relative rotation of said wall means (20, 21, 22, 23).

41. Container means according to claim 40, wherein said hinge means (5) is made of further plastic material means.

42. Container means according to claim 41 when claim 40 depends on claim 33, or on one of claims 34 to 39 when depending on claim 33, wherein said further plastic material means comprises said plastic material.

43. Container means according to claim 41, or 42, wherein said semi finished laminar means (2) comprises slot means (4) suitable for receiving said further plastic material means.

44. Container means according to claim 43, wherein said semi finished laminar means (2) further comprises channel means (10) suitable for interconnecting said slot means (4) and said hollow means (9).

45. Container means according to one of claims 31 to 44, wherein said joint means (6) comprises male means (7) associated with first walls (22, 23) of said wall means and cooperating with female means (8) associated with further walls (20, 22) of said wall means.

46. Container means according to claim 45, wherein said male means (7) comprises jutting means (11) suitable for engaging respective seat means (12) obtained in said female means (8).

47. Container means according to claim 46, wherein said jutting means (11) can be moved between a withdrawn resting position (X) in which it does not interact with said seat means (12) and an advanced working position in which it is received in said seat means (12) .

48. Container means according to claim 46, or 47, wherein said seat means (12) is entirely contained within the thickness (S) of said semi finished laminar means (2).

49. Container means according to claim 47, or 48 when depending on claim 47, wherein, in said withdrawn resting position (X), said jutting means (11) is entirely contained within the thickness (S) of said semi finished laminar means (2).

50. Container means according to one of claims 46 to 49, wherein said jutting means (11) is connected to bracket means (14), said bracket means (14) having a first extremity connected to said jutting means (11) and a second extremity connected to a base body of said male means (7).

51. Container means according to one of claims 45 to 50, wherein said male means (7) comprises first male means (7a) extending substantially parallel to said semi finished laminar means (2) and suitable for coupling with first female means (8a) of said female means (8).

52. Container means according to one of claims 45 to 51, wherein said male means (7) comprises further male means (7b) extending substantially at right angles to said semi finished laminar means (2) and suitable for coupling with further female means (8b) of said female means (8).

53. Container means according to one of claims 31 to 52, wherein said joint means (6) comprises hooking promoting means (17) arranged to improve the connection of said joint means (6) to said semi finished laminar means (2).

54. Container means according to claim 53, wherein said hooking promoting means (17) comprises body means (18) integral with said joint means (6) and having a dovetail section suitable for being shapingly coupled with suitably shaped hollows (9) of said semi finished laminar means (2).

55. Container means according to claim 53, or 54, wherein said hooking promoting means (17) comprise appendage means (19) which projects from said joint means (6) and is formed in such a way as to increase the surface of the part of the joint means (6) interacting with the semi finished laminar means (2).

56. Container means according to one of claims 31 to 55, wherein said weakening means (3) comprises grasping means (26) arranged to strengthen the fastening of said weakening means (3) to said semi finished laminar means (2).

57. Container means according to claim 56, wherein said grasping means (26) comprises protuberance means (27) extending from said weakening means (3) in order to be shapingly coupled with respective cavity means (28) made in said semi finished laminar means (2).

58. Container means according to claim 56, or 57, wherein said grasping means (26) is made from yet further plastic material means.

59. Container means according to claim 58 when claim 56 depends on claim 33, or on one of claims 34 to 55 when depending on claim 33, wherein said yet further plastic material means comprises plastic material.

60. Container means according to one of claims 56 to 59, wherein said grasping means (26) is entirely contained within the thickness (S) of said semi finished laminar means (2).

61. Container means, said container means being obtainable from semi finished laminar means (2) foldable along weakening means (3) to pass from a substantially two-dimensional configuration (A) to an assembled three-dimensional configuration, said weakening means (3) comprising connecting means (5) suitable for mutually interconnecting portions (20, 21, 22, 23) of said semi finished laminar means (2) and enabling a relative rotation thereof, **characterised in that** said weakening means (3) comprises grasping means (26) arranged for strengthening the fastening of said connecting means (5) to said semi finished laminar means (2).

62. Container means, according to claim 61, wherein said grasping means (26) comprises protuberance means (27) extending from said weakening means (3) in order to be shapingly coupled with respective cavity means (28) made in said semi finished laminar means (2).

63. Container means according to claim 61, or 62, wherein said grasping means (26) is made of plastic material.

64. Container means according to any of claims 61 to 63, wherein said grasping means (26) is entirely contained within the thickness (S) of said semi finished laminar means (2).

65. Container means according to one of claims 61 to 64, and also comprising pressure fastening means suitable for mutually fastening said portions (20, 21, 22, 23) in order to maintain said container means in said assembled three-dimensional configuration.

66. Container means according to claim 65, wherein said fastening means comprises joint means (6) which is distinct from said semi finished laminar means (2) and connected to said semi finished laminar means (2).

67. Container means according to claim 66, wherein said joint means (6) is made of plastic material means.

68. Container means according to claim 67 when claim 65 depends on claim 63, or on claim 64 when depending on claim 63, wherein said plastic material means comprises said plastic material.

69. Container means according to claim 68, wherein said semi finished laminar means (2) comprises hollow means (9) inside which said plastic material means can be injected and moulded.

70. Container means according to claims 61 to 69, wherein said connecting means comprises hinge means (5) suitable for enabling a relative rotation of said portions (20, 21, 22, 23).

71. Container means according to claim 70, wherein said hinge means (5) is made of further plastic material means.

72. Container means according to claim 71 when claim 70 depends on claim 63, or one of claims 64 to 69 when depending on claim 63, wherein said further plastic material means comprises said plastic material.

73. Container means according to claim 71, or 72, wherein said semi finished laminar means (2) comprises slot means (4) suitable for receiving said further plastic material means.

74. Container means according to claim 73, wherein said semi finished laminar means (2) further comprises channel means (10) suitable for interconnecting said slot means (4) and said hollow means (9).

75. Container means according to any of claims 61 to 74, wherein said joint means (6) comprises male means (7), said male means (7) being associated with first portions (22, 23) of said portions and cooperating with female means (8) associated with further portions (20, 22) of said portions.

76. Container means according to claim 75, wherein said male means (7) comprises jutting means (11) suitable for engaging respective seat means (12) obtained in said female means (8).

77. Container means according to claim 76, wherein said jutting means (11) can be moved between a withdrawn resting position (X) in which it does not interact with the seat means (12) and an advanced working position in which it is received in said seat means (12).

78. Container means according to claim 76, or 77, wherein said seat means (12) is entirely contained within the thickness (S) of said semi finished laminar means (2).

79. Container means according to claim 77, or 78 when depending on claim 77, wherein, in said withdrawn resting position (X), said jutting means (11) is entirely contained within the thickness (S) of said semi finished laminar means (2).

80. Container means according to any of claims 76 to 79, wherein said jutting means (11) is connected to bracket means (14), said bracket means (14) having a first extremity connected to said jutting means (11) and a second extremity connected to a base body of said male means (7).

81. Container means according to any of claims 75 to 80, wherein said male means (7) comprises first male means (7a) extending substantially parallel to said semi finished laminar means (2) and suitable for coupling with first female means (8a) of said female means (8).

82. Container means according to any of claims 75 to 81, wherein said male means (7) comprises further male means (7b) extending substantially at right angles to said semi finished laminar means (2) and suitable for coupling with further female means (8b) of said female means (8).

83. Container means according to one of claims 61 to 82, wherein said joint means (6) comprises hooking promoting means (17) arranged to improve the connection of said joint means (6) to said semi finished laminar means (2).

84. Container means according to claim 83, wherein said hooking promoting means (17) comprises body means (18) integral with said joint means (6) and having a dovetail section suitable for being shapingly coupled with suitably shaped hollows (9) of said semi finished laminar means (2).

85. Container means according to claim 83, or 84, wherein said hooking promoting means (17) comprises appendage means (19) which projects from said joint means (6) and is formed in such a way as to increase the surface of the part of the joint means (6) that interacts with the semi finished laminar means (2).

86. Container means, according to one of claims 61 to 85, wherein said portions define wall means (20, 21, 22, 23) of said container means (1).

87. Container means according to claim 86, wherein, along the edge means (24) of said wall means (23), joining means (25) is provided, said joining means (25) being suitable for preventing damage to the products which can be placed in said container means (1).

88. Container means according to claim 87, wherein said joining means comprises rounded edge means (25).

89. Container means according to claim 87, or 88, wherein said joining means (25) is made from further plastic material means.

90. Container means according to claim 89 when claim 86 depends on claim 63, or on one of claims 64 to 85 when depending on claim 63, wherein said further plastic material means comprises said plastic material.

91. Container means according to any of claims 87 to 90, wherein said joining means (24) is entirely contained within said thickness (S).
